# EUROPEAN PATENT APPLICATION

(11) **EP 4 322 640 A1**
(43) Date of publication of application: **14.02.2024**
(21) Application number: 21936013.8
(22) Date of filing: 07.04.2021
(51) Int. Cl.: H04W 68/00, H04W 52/02

(54) **TERMINAL AND PAGING MONITORING METHOD**

(71) Applicant: NTT DOCOMO, INC., Tokyo 100-6150 (JP)
(72) Inventor: NAKAMURA, Takuma, Tokyo 100-6150 (JP); OHARA, Tomoya, Tokyo 100-6150 (JP)
(74) Representative: Hoffmann Eitle
(86) International application number: PCT/JP2021/014817
(87) International publication number: WO 2022/215209

(57) **Abstract**

A terminal including: a reception unit configured to receive a first indication related to paging monitoring from a base station; and a control unit configured to determine whether to receive a second indication by the reception unit based on the first indication, wherein, when the reception unit receives the second indication, the reception unit skips paging monitoring or performs paging monitoring based on the second indication.

## Description

### [FIELD OF THE INVENTION]

The present invention relates to a terminal in a wireless communication system.

### [BACKGROUND ART]

In the 3GPP (3rd Generation Partnership Project), a wireless communication scheme called 5G or NR (New Radio) (hereinafter referred to as "NR") has been proposed in order to realize further increase in system volume, further increase in data transmission rate, further reduction in delay in a wireless section, and the like. In the NR, various wireless technologies and network architectures have been studied in order to satisfy a requirement that a delay in a wireless section be equal to or less than 10Gbps while achieving a throughput equal to or greater than 1ms.

Also in NR, paging for calling a terminal of a standby state in a coverage area is performed at the time of an incoming call, as in LTE. In NR, a terminal in an RRC_IDLE state or an RRC_INACTIVE state performs a discontinuous reception operation for power saving in order to monitor a paging DCI (Non-Patent Document 1). In the discontinuous reception operation, a period during which the terminal wakes up from the sleep state and performs paging monitoring is referred to as a paging occasion (PO). Hereinafter, a terminal in the RRC_IDLE state or the RRC INACTIVE state may be referred to as an idle / inactive mode UE.

### [Prior Art Document]

### [Non Patent Literature]

[Non-Patent Document 1] 3GPP TS 38.304 V16. 1.0 (2020 - 07)

### [SUMMARY OF THE INVENTION]

### [Problems to be Solved by the Invention]

When an idle/inactive mode UE in NR performs paging monitoring in a paging occasion (PO), it is necessary to perform reception processing of a plurality of synchronization signal blocks (SSBs) in order to perform time / frequency tracking, auto gain control (AGC), and the like in advance.

However, since the SSB is transmitted in a relatively long cycle, the terminal needs to wake up earlier than the timing of PO reception for the SSB reception processing. Therefore, a long sleep cannot be ensured, leading to an increase in power consumption of the terminal.

A paging early indication (hereinafter referred to as PEI) has been proposed to notify in advance whether or not a terminal needs to wake up in a PO. However, the PEI proposed in the related art has a problem in that it may not be possible to appropriately reduce power consumption of the terminal.

The present invention has been made in view of the above circumstances, and an object thereof is to provide a technique capable of appropriately reducing power consumption of a terminal in monitoring paging.

### [Means for solving the problem]

According to the disclosed technique, there is provided a terminal including:
a reception unit configured to receive a first indication related to paging monitoring from a base station; and
a control unit configured to determine whether to receive a second indication by the reception unit based on the first indication,
wherein, when the reception unit receives the second indication, the reception unit skips paging monitoring or performs paging monitoring based on the second indication.

### [Effects of the Invention]

According to the disclosed technique, there is provided a technique capable of appropriately reducing power consumption of a terminal in monitoring paging.

### [BRIEF DESCRIPTION OF THE DRAWINGS]

[Fig. 1] FIG. 1 is a diagram for explaining a wireless communication system according to an embodiment of the present invention;
[Fig. 2] FIG. 2 is a diagram for explaining a wireless communication system according to an embodiment of the present invention;
[Fig. 3] FIG. 3 is a diagram illustrating an operation example for paging monitoring;
[Fig. 4] FIG. 4 is a diagram for explaining PEI;
[Fig. 5] FIG. 5 is a diagram illustrating an operation example for paging monitoring;
[Fig. 6] FIG. 6 is a diagram for explaining an outline of the embodiment;
[Fig. 7] FIG. 7 is a sequence diagram showing a basic operation example;
[Fig. 8] FIG. 8 is a diagram for explaining Example 3-1;
[Fig. 9] FIG. 9 is a diagram for explaining Example 3-2;
[Fig. 10] FIG. 10 is a diagram for explaining Example 3-3;
[Fig. 11] FIG. 11 is a diagram for explaining Example 4;
[Fig. 12] FIG. 12 is a diagram for explaining Example 5;
[Fig. 13] FIG. 13 is a diagram for explaining Example 5;
[Fig. 14] FIG. 14 is a diagram showing an example of a functional configuration of a base station 10 according to an embodiment of the present invention;
[Fig. 15] FIG. 15 is a diagram showing an example of a functional configuration of a terminal 20 according to an embodiment of the present invention;
[Fig. 16] FIG. 16 is a diagram illustrating an example of a hardware configuration of a base station 10 or a terminal 20 according to an embodiment of the present invention.

### [DETAILED DESCRIPTION OF THE INVENTION]

Hereinafter, embodiments of the present invention will be described with reference to the drawings. It should be noted that the embodiments described below are merely examples, and embodiments to which the present invention is applied are not limited to the following embodiments.

In the operation of the wireless communication system according to the embodiment of the present invention, an existing technique is appropriately used. The existing technology is, for example, the existing NR, but is not limited to the existing NR.

In this specification, terms used in the existing NR or LTE specifications such as PDCCH, RRC, MAC, and DCI are used. However, what is represented by a channel name, a protocol name, a signal name, a function name, or the like used in this specification may be referred to by another name. In addition, although it is assumed that the terminal operation in the present embodiment is an operation of a terminal in idle / inactive mode, this is an example, and the technology according to the present invention may be applied to a terminal in connected mode.

### (System Configuration)

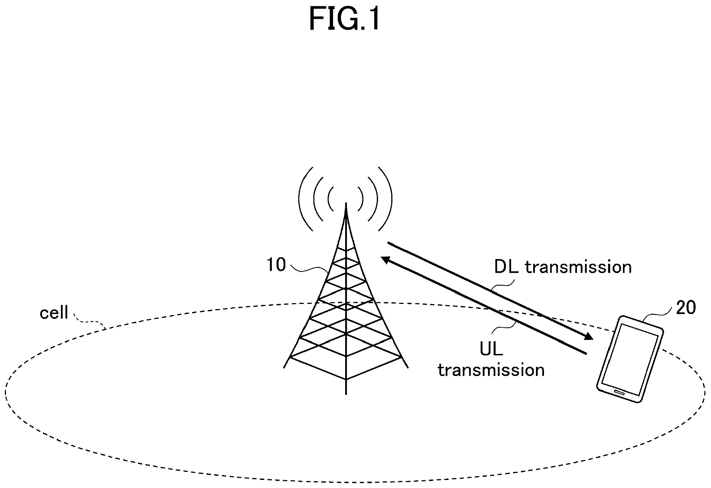

FIG. 1 is a diagram for explaining a wireless communication system according to an embodiment of the present invention. As shown in FIG. 1, the radio communication system according to the embodiment of the present invention includes a base station 10 and a terminal 20. Although one base station 10 and one terminal 20 are shown in FIG. 1, this is merely an example, and a plurality of base stations 10 and a plurality of terminals 20 may be provided.

The base station 10 is a communication apparatus that provides one or more cells and performs wireless communication with the terminal 20. A physical resource of a radio signal is defined in a time domain and a frequency domain. The time domain may be defined by the number of OFDM symbols, and the frequency domain may be defined by the number of subcarriers or the number of resource blocks. A TTI (Transmission Time Interval) in the time domain may be a slot, or a TTI may be a subframe.

The base station 10 transmits a synchronization signal, system information, and the like to the terminal 20. The synchronization signal is, for example, an NR-PSS and an NR-SSS. Further, the synchronization signal may be SSB. The system information is transmitted by, for example, an NR-PBCH or a PDSCH, and is also referred to as broadcast information. As illustrated in FIG. 1, a base station 10 transmits a control signal or data to a terminal 20 in downlink (DL), and receives a control signal or data from the terminal 20 in uplink (UL). Here, what is transmitted on a control channel such as the PUCCH or the PDCCH is referred to as a control signal, and what is transmitted on a shared channel such as the PUSCH or the PDSCH is referred to as data. However, such a way of naming is merely an example.

The terminal 20 is a communication apparatus having a wireless communication function such as a smartphone, a mobile phone, a tablet, a wearable terminal, and an M2M (Machine-to-Machine) communication module. As illustrated in FIG. 1, the terminal 20 uses various communication services provided by the radio communication system by receiving a control signal or data from the base station 10 in DL and transmitting a control signal or data to the base station 10 in UL. Note that the terminal 20 may be referred to as UE and the base station 10 may be referred to as gNB.

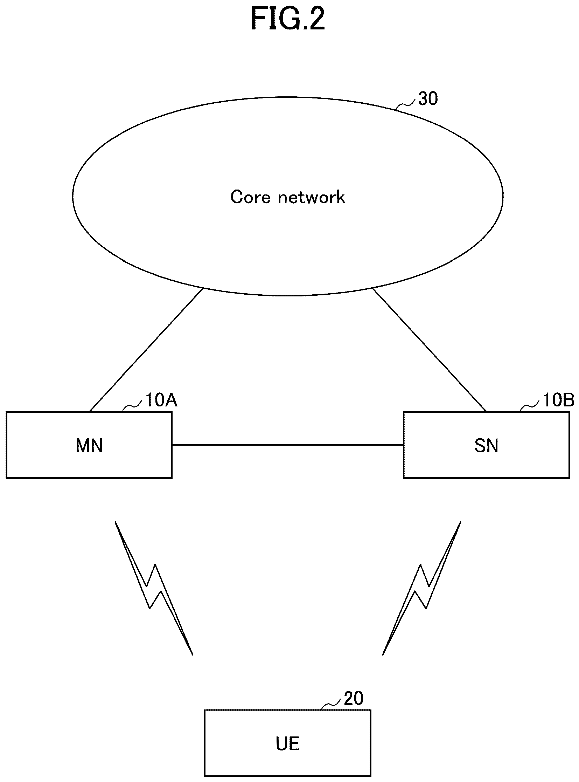

FIG. 2 illustrates a configuration example of a radio communication system in a case where dual connectivity (DC) is performed. As shown in FIG. 2, a base station 10A serving as MN (Master Node) and a base station 10B serving as SN (Secondary Node) are provided. The base stations 10A and 10B are each connected to a core network. The terminal 20 can communicate with both the base stations 10A and 10B.

A cell group provided by the base station 10A that is MN is referred to as an MCG (Master Cell Group), and a cell group provided by the base station 10B that is SN is referred to as an SCG (Secondary Cell Group).

The processing operation in the present embodiment may be executed by the system configuration shown in FIG. 1, may be executed by the system configuration shown in FIG. 2, or may be executed by a system configuration other than these.

### (Paging Monitoring Operation Example)

Hereinafter, an operation example of paging monitoring in the terminal 20 will be described. Also in NR, as in LTE, paging for calling a terminal in a standby state in coverage area is performed at the time of an incoming call. In NR, the terminal 20 performs a discontinuous reception operation for power saving in order to monitor a paging DCI (Non-Patent Document 1). In the discontinuous reception operation, a period during which the terminal 20 wakes up from a sleep state and performs paging monitoring is referred to as a paging occasion (PO).

The terminal 20 monitors, for example, one PO per 1 DRX cycle. The PO includes, for example, a plurality of slots.

As described above, when the terminal 20 performs paging monitoring in a paging occasion (PO), it is necessary to perform reception processing of a plurality of synchronization signal blocks (SSBs) in order to perform time / frequency tracking, auto gain control (AGC), and the like in advance. The number of SSBs to be received in advance varies depending on reception quality.

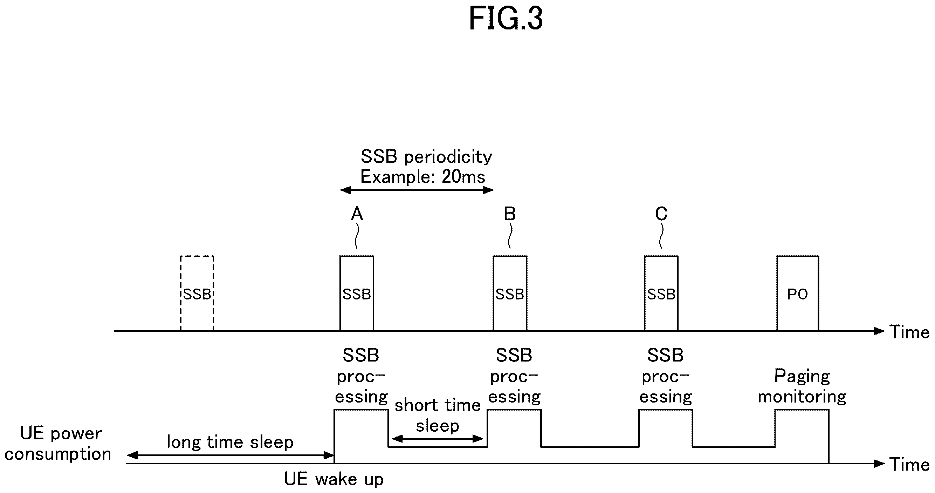

An operation example of the terminal 20 in a case where SSB reception is performed before PO will be described with reference to FIG. 3. The upper side of FIG. 3 shows the reception operation of SSB, and the lower side shows power consumption of the terminal 20.

FIG. 3 shows an example in which SSB cycle is 20ms and three SSBs are received before a PO. The terminal 20 sleeps for a long time before a timing of an SSB indicated by A, and wakes up at a timing of an SSB indicated by A. After the reception of the SSB indicated by A, sleep is performed, but since sleep is performed for a short time, it is necessary to activate a part of circuits, so that power is consumed. SSB reception is similarly performed at timings B and C, and paging monitoring is performed at a PO.

However, since the SSB is transmitted in a relatively long cycle, the terminal 20 needs to wake up early with respect to the timing of PO reception for SSB reception processing. Therefore, a long sleep cannot be ensured, which leads to an increase in terminal power consumption. In the example of FIG. 3, the sleep for a long time must be terminated before 60ms of the PO.

For paging monitoring, in addition to the SSB or instead of the SSB, it is also possible to use TRS / CSI-RS which is a reference signal transmitted in a shorter cycle than that of the SSB. That is, it is conceivable to perform time / frequency tracking, auto gain control (AGC), and the like using the TRS/CSI-RS.

However, the TRS/CSI-RS is a reference signal used by the terminal 20 in an RRC connected state (connected mode UE), and is not always transmitted in a cell (and beam) in which the terminal 20 is located. For example, when there is no connected mode UE in a beam in a cell, the base station 10 may determine that there is no need to transmit a TRS/CSI-RS and perform control not to transmit a TRS/CSI-RS.

When it is unknown whether or not a TRS/CSI-RS is transmitted, the terminal 20 cannot determine in advance at which timing it is sufficient to wake up. Therefore, similarly to the case of using SSB shown in FIG. 3, it is necessary to wake up a longer time before the PO, and the power consumption amount increases.

In order to avoid such an increase in the amount of power consumption, as described above, a PEI that notifies in advance whether or not the terminal 20 needs to wake up in a PO has been proposed. Specifically, DCI-based PEI in which notification is performed using a DCI and RS/sequence-based PEI in which notification is performed using a reference signal (or sequence) have been proposed.

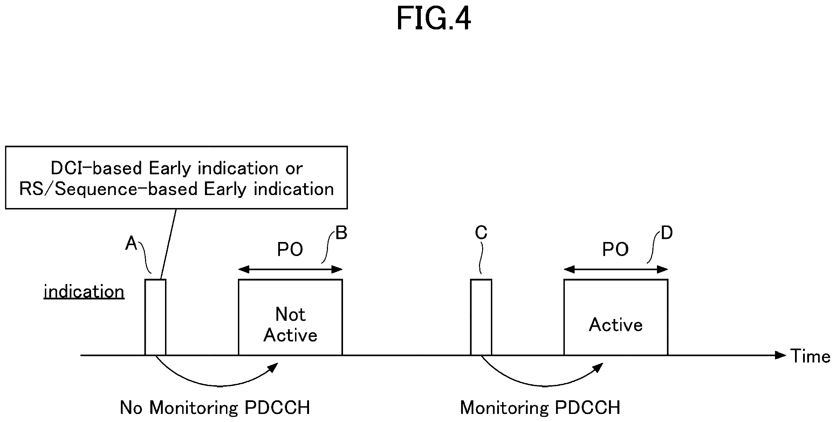

Referring to FIG. 4, an operation example of the terminal 20 when a PEI is used will be described. At the time point indicated by A in FIG. 4, when the terminal 20 receives a PEI indicating that it is not necessary to wake up in a PO, the terminal 20 does not monitor a PDCCH in a PO indicated by B. At the time point indicated by C, when a PEI instructing to wake up in the PO is received, monitoring of a PDCCH is performed in a PO indicated by D. Since unnecessary monitoring of a PO can be avoided by the PEI, power consumption can be reduced by that amount.

It is also possible to reduce power consumption and perform PO monitoring using a TRS/CSI-RS by the PEI. That is, by the PEI, information for enabling the terminal 20 to use a TRS/CSI-RS for paging monitoring in a PO is transmitted from the base station 10 to the terminal 20. Note that, although a TRS/CSI-RS is used as a reference signal used for paging monitoring in the present embodiment, this is merely an example, and a reference signal other than the TRS/CSI-RS may be used.

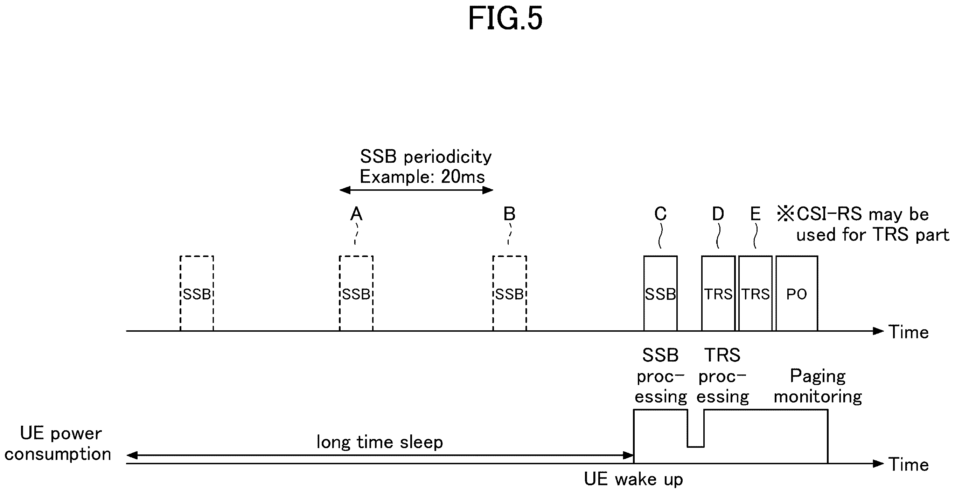

FIG. 5 illustrates an operation example in a case where the terminal 20 uses a TRS for paging monitoring in a PO by using information notified by the PEI. Although FIG. 5 illustrates a case where a TRS is used as an example, a CSI-RS may be used instead of the TRS. The upper side of FIG. 5 shows reception operations such as reception of TRS, and the lower side shows power consumption of the terminal 20.

It is assumed that the terminal 20 knows that the TRS illustrated in D and E of FIG. 5 is transmitted, the timing thereof, the time-frequency resource, and the like from the information received from the base station 10.

The terminal 20 sleeps for a long time before the timing of an SSB indicated by C, and wakes up at the timing of an SSB indicated by C. The terminal 20 performs TRS reception at the timings D and C, and performs paging monitoring at a PO.

### (Problems)

As described above, DCI-based PEI and RS/sequence-based PEI have been proposed as a PEI.

Here, the DCI-based PEI is highly reliable and highly functional, but is sensitive to synchronization errors. On the other hand, since the RS/sequence-based PEI is not sensitive to a synchronization error, the RS/sequence-based PEI can be received relatively easily, but, amount of information that can be notified to the terminal 20 is small, and it is difficult to notify information other than wake up (or Go to sleep) notification. Therefore, there is a problem in that the RS/sequence-based PEI alone cannot be utilized in combination with another power saving technique (for example, utilization for synchronization of sub-grouping or TRS/CSI-RS), and that an operation for appropriate power consumption reduction may not be performed.

### (Outline of Embodiment)

In the present embodiment, in order to solve the above problem, when the terminal 20 is instructed to wake up in a PO by an RS / Sequence-based PEI, the terminal 20 receives a DCI-based PEI. The monitoring operation of the DCI-based PEI is performed to detect the DCI-based PEI. When the terminal 20 is not instructed to perform Wake up operation in a PO by the RS/Sequence-based PEI (for example, when the terminal 20 is instructed to perform Go to sleep operation), the terminal 20 may not receive the DCI-based PEI (may not monitor the DCI-based PEI).

That is, the terminal 20 receives an RS/Sequence-based PEI and determines whether to receive a DCI-based PEI based on the RS/Sequence-based PEI. By such an operation, power consumption reduction is achieved.

Note that, in the present embodiment, the notification called "DCI-based PEI" may be a DCI other than a PEI or may be a PDCCH.

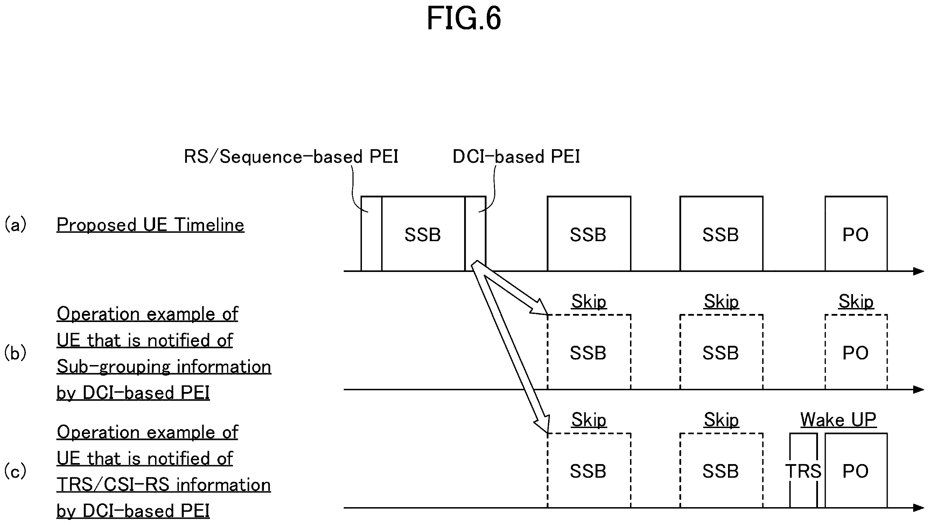

An outline of the operation of the terminal 20 will be described with reference to FIG. 6. (a) illustrates a time line of terminal operation in the present embodiment, and illustrates a time position of each signal/occasion that can be received by the terminal 20. (b) and (c) illustrate an operation example of the terminal 20 according to a PEI. Note that, in the present embodiment, signal transmission (reception by the terminal 20) is performed from the base station 10 to the terminal 20 in the order of RS/Sequence-based PEI -> SSB -> DCI-based PEI, but this is an example.

When the terminal 20 is instructed to wake up in a PO by the RS/Sequence-based PEI illustrated in (a), the terminal 20 performs monitoring operation of a DCI-based PEI and receives a DCI-based PEI.

When the terminal 20 is notified of Sub-grouping Information (here, a sub-group other than the sub-group of the terminal 20 is indicated) by a DCI-based PEI, as illustrated in (b), SSB reception is skipped and monitoring in a PO is skipped.

When the terminal 20 is notified of information for using a TRS/CSI-RS by a DCI-based PEI, as illustrated in (c), the terminal 20 skips reception of an SSB before a TRS, receives the TRS, and performs monitoring in a PO.

### (Sequence Example)

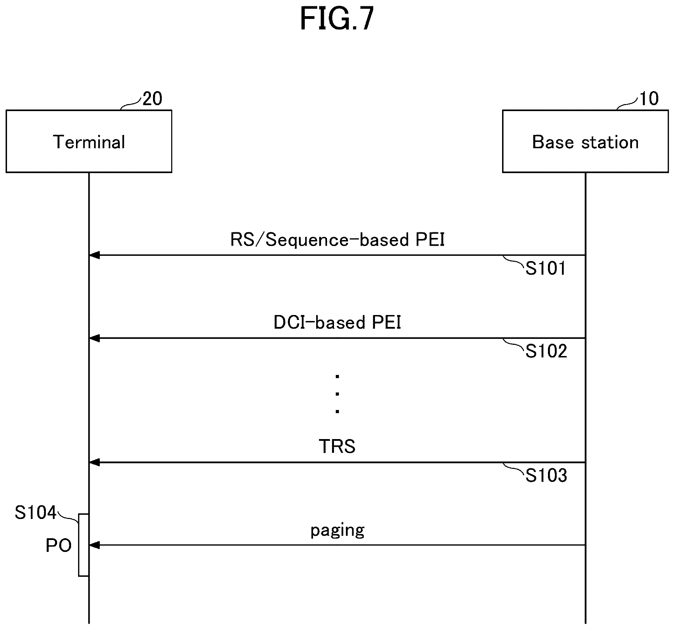

FIG. 7 shows an example of a sequence in the present embodiment. In S101, the base station 10 transmits an RS/sequence-based PEI and the terminal 20 receives the RS/sequence-based PEI.

In S102, the base station 10 transmits a DCI-based PEI and the terminal 20 receives the DCI-based PEI. Note that, when a notification that the Wake up in a PO is not necessary is given by the RS/sequence-based PEI in S101, or when a notification or configuration that the reception of a DCI-based PEI is not necessary is given, the terminal 20 does not receive the DCI-based PEI in S102. Also, in this case, the base station 10 may not transmit a DCI-based PEI in S102.

In S102, when the terminal 20 receives information for using a TRS (example : time-frequency resources of the TRS and the like) by a DCI-based PEI, the terminal 20 sleeps until before S103 and wakes up in S103 to receive a TRS. The terminal 20 performs paging monitoring in S104.

Hereinafter, Examples 1 to 5 will be described as more specific examples. Examples 1 to 5 can be carried out in any combination. A plurality of Examples or a plurality of options described in each Example can also be arbitrarily combined and implemented.

### (Example 1)

When the terminal 20 is instructed (indicated) to wake up in a PO by an RS/Sequence-based PEI from the base station 10 (that is, when the terminal 20 is notified of a Wake Up Indication), for example, the terminal 20 may perform an operation of one of the following option 1 and option 2.

### <Option 1>

Assuming that a DCI-based PEI is notified from the base station 10, the terminal 20 performs a monitoring operation of a DCI-based PEI (blind decoding or the like).

An RNTI used when the terminal 20 performs blind decoding of a DCI-based PEI may be defined in the specification or may be notified from the base station 10 by RRC signaling, MAC CE, DCI, or the like.

The search space monitored by the terminal 20 when performing blind decoding of the DCI-based PEI may be defined in the specification or may be notified from the base station 10 by RRC signaling, MAC CE, DCI, or the like.

### <Option 2>

When it is configured in advance in the terminal 20 that a DCI-based PEI is not notified, or when it is notified in advance from the base station 10 to the terminal 20 that a DCI-based PEI is not notified, the terminal 20 does not perform blind decoding of the DCI-based PEI and performs the normal Timeline operation. The normal Timeline operation is, for example, an operation of SSB reception → PO Wake Up as illustrated in FIG. 3.

For example, the information indicating that the DCI-based PEI is not notified is notified from the base station 10 to the terminal 20 using an SIB, a DCI, a MAC CE, an RRC signaling, or the like.

### <Option 3>

Another example in the Example 1 will be described as option 3. In addition to the case where the terminal 20 is notified of the Wake Up Indication by the RS/Sequence-based PEI from the base station 10, the terminal 20 may perform the operation of option 1 also in the case where the terminal 20 is notified of information (Go to sleep Indication) indicating that the terminal 20 is to sleep in a PO.

In this case, there may be a difference between information received by an RS/Sequence-based PEI and information received by a DCI-based PEI. Which is prioritized when there is such a difference will be described in Example 3-3 to be described later.

### (Example 2)

In the present embodiment, the information notified from the base station 10 to the terminal 20 by a DCI-based PEI may be one of the following (1) to (7), or may be any plurality of the following (1) to (7). The following (1) to (7) are examples, and information different from any of the following (1) to (7) may be notified by the DCI-based PEI.

(1)Wake UP Indication
(2)Go to Sleep Indication
(3)Sub-grouping Information
(4)Information about CSI-RS/TRS (example : configuration, availability)
(5)SI change
(6)ETWS
(7)Information related to P-RNTI (for example, when multiple P-RNTIs are defined, a specific P-RNTI is notified).

As described above, by using the DCI-based PEI, it is possible to notify the terminal 20 of various pieces of information.

### (Example 3)

In Example 3, Examples 3-1 to 3-3 will be described as specific examples of the terminal operation using the information notified by the DCI-based PEI described in Example 2.

### <Example 3-1>

In the Example 3-1, an example in which sub-grouping information is notified by a DCI-based PEI will be described.

Here, it is assumed that a plurality of terminals are divided into one or more sub-groups, and the sub-grouping information is information for notifying each terminal 20 of a sub-group. The information notifying the Sub-group may be, for example, an ID corresponding to the Sub-group, a bit in a bitmap (the position of a bit of 1 indicates the Sub-group), or other information.

Each terminal belonging to a certain sub-group monitors the same PO. Which Sub-group each terminal 20 belongs to may be defined by a specification or may be notified from the base station 10 to the terminal 20 by RRC signaling, MAC CE, DCI, or the like.

Although sub-grouping in which a certain group is divided into one or more subgroups is a target in the Example 3-1, the Example 3-1 is also applicable to "grouping" in which "Sub" of Sub-grouping is not attached.

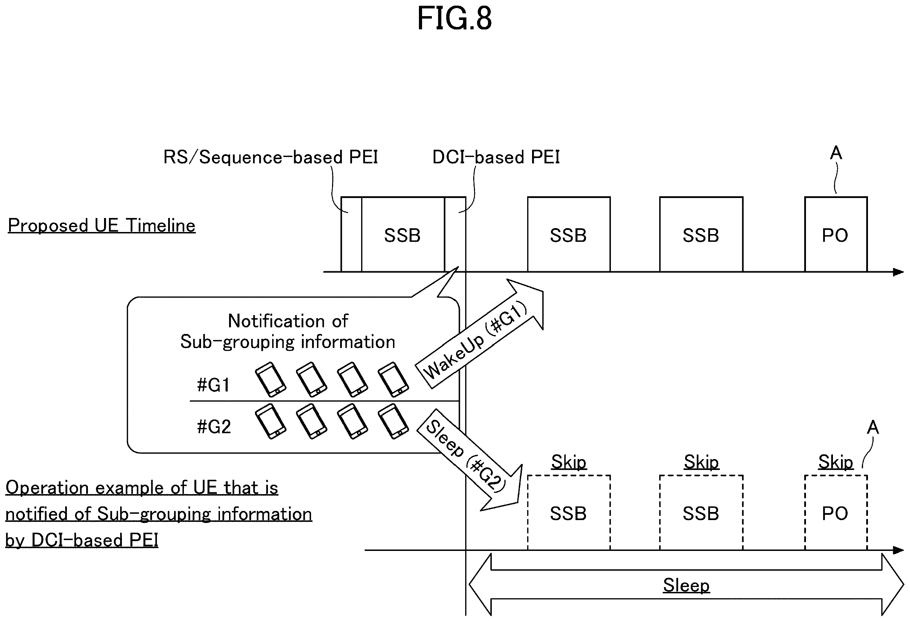

When notified of a Sub-group to which the terminal 20 belongs, the terminal 20 performs paging monitoring in a PO. In the example illustrated in FIG. 8, when each of the terminals 20 belonging to Sub-group #G1 receives Sub-grouping Information indicating #G1 by a DCI-based PEI, each of the terminals 20 wakes up, performs SSB reception, and performs paging monitoring at a PO indicated by A.

On the other hand, when each of the terminals 20 belonging to the Sub-group #G2 receives Sub-grouping Information indicating #G1 by a DCI-based PEI, each of the terminals 20 determines that paging monitoring in a PO indicated by A is unnecessary, and skips SSB reception and monitoring in a PO. With such an operation, it is possible to wake up only when PO monitoring is necessary (that is, when there is a possibility that paging is received at the PO), and thus it is possible to appropriately reduce power consumption.

### <Example 3-2>

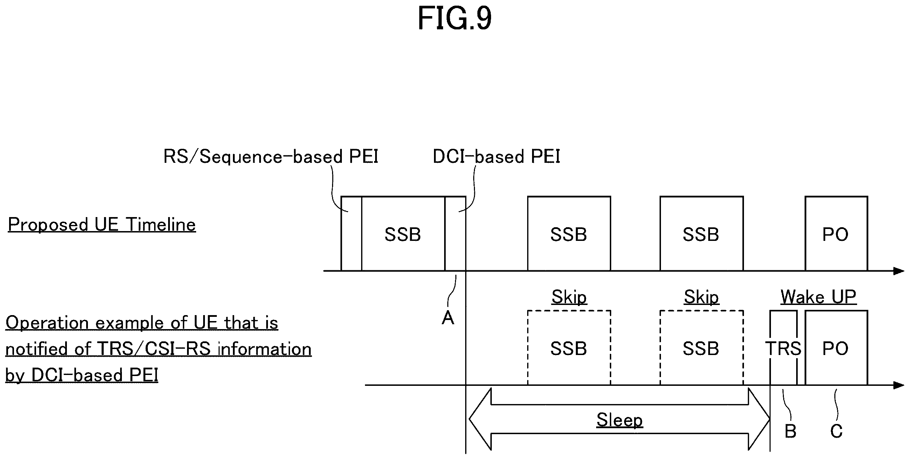

In Example 3-2, an operation example of the terminal 20 in a case where TRS/CSI-RS information is notified from the base station 10 to the terminal 20 by a DCI-based PEI will be described with reference to FIG. 9. The operation when TRS/CSI-RS information is notified is the same as the operation described with reference to FIG. 5.

Here, a case where a TRS is used will be described. It is also assumed that the TRS is configured around the PO. When the terminal 20 receives information for using the TRS (resource information of the TRS to be used and the like) from the base station 10 by a DCI-based PEI indicated by A, the terminal 20 skips SSB reception, performs synchronization processing and the like by receiving the TRS indicated by B, and performs paging monitoring in a PO indicated by C.

As shown in FIG. 9, since the terminal 20 can sleep during the period in which SSB reception is skipped, the power consumption can be reduced.

### <Example 3-3>

In the Example 3-3, an operation example of the terminal 20 in a case where the terminal 20 is notified of a Wake Up Indication or a Go to sleep Indication from the base station 10 by a DCI-based PEI will be described.

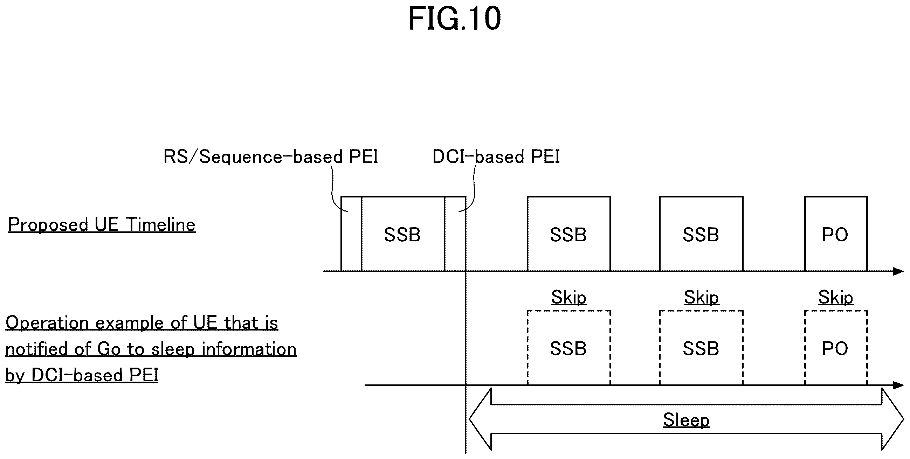

Basically, when the terminal 20 is notified of a Wake Up Indication by a DCI-based PEI from the base station 10, the terminal 20 performs SSB reception and performs paging monitoring by a PO, and when the terminal 20 is notified of a Go to sleep Indication by a DCI-based PEI from the base station 10, the terminal 20 sleeps without performing SSB reception and monitoring in a PO. FIG. 10 illustrates an operation example of the terminal 20 when notified of a Go to sleep Indication by a DCI-based PEI from the base station 10.

On the other hand, there may be a case where information notified by an RS/sequence-based PEI received by the terminal 20 before a DCI-based PEI is different from information notified by the DCI-based PEI. For example, there is a case where a Wake Up Indication is notified by an RS/sequence-based PEI and a Go to sleep Indication is notified by a DCI-based PEI, or a case where a Go to sleep Indication is notified by an RS/sequence-based PEI and a Wake Up Indication is notified by a DCI-based PEI.

In a case where information notified by an RS/sequence-based PEI and information notified by a DCI-based PEI are different from each other as described above, the terminal 20 may perform any one or more of the following operations (1) to (4). Which operation of (1) to (4) is performed by the terminal 20 may be defined in a specification, or may be notified from the base station 10 to the terminal 20 by RRC signaling, MAC CE, DCI, or the like.
(1) The terminal 20 gives priority to the notification content of the DCI-based PEI over the notification content of the RS/sequence-based PEI, and operates in accordance with the notification content of the DCI-based PEI.
(2) The terminal 20 gives priority to the notification content of the RS/sequence-based PEI over the notification content of the DCI-based PEI, and operates in accordance with the notification content of the RS/sequence-based PEI.
(3) The base station 10 notifies the terminal 20 of which of the notification content of the DCI-based PEI and the notification content of the RS/sequence-based PEI is prioritized in advance. The terminal 20 operates in accordance with the notification. The method of notification from the base station 10 to the terminal 20 may be SIB, DCI, MAC CE, or RRC signaling.
(4) The terminal 20 may determine which is prioritized based on power strength (which may be reception quality or the like) of the received PEI. On the basis of the reception strength/reception quality, which of the notification content of the DCI-based PEI and the notification content of the RS / sequence-based PEI is prioritized may be defined in the specification or may be notified from the base station 10 to the terminal 20 by RRC signaling, MAC CE, DCI, or the like.

For example, among the notification content of the DCI-based PEI and the notification content of the RS/sequence-based PEI, the terminal 20 prioritizes notification content of PEI of better reception quality (or larger reception strength) and operates according to the notification content.

In addition, for example, if the reception quality of the DCI-based PEI is equal to or higher than XdB, the DCI-based PEI may be prioritized, and otherwise, the RS-based PEI may be prioritized. The value of "X" may be defined in the specification, or may be notified from the base station 10 to the terminal 20 by RRC signaling, MAC CE, or the like.

According to the Example 3-3, even when the information notified by the RS/sequence-based PEI and the information notified by the DCI-based PEI are different from each other, the terminal 20 can appropriately operate.

### (Example 4)

Next, Example 4 will be described. In the Example 4, an operation of the terminal 20 when the terminal 20 fails to detect an RS/Sequence-based PEI transmitted from the base station 10 will be described. The terminal 20 that fails to detect the RS/Sequence-based PEI transmitted from the base station 10 may perform, for example, an operation of option 1 or option 2 described below.

### <Option 1>

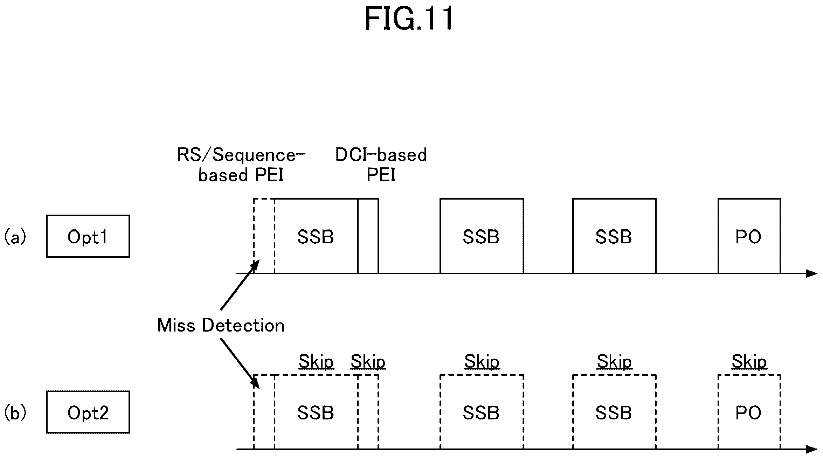

The terminal 20 performs blind decoding of a DCI-based PEI on the assumption that the DCI-based PEI is notified from the base station 10. Performing blind decoding of the DCI-based PEI may be rephrased as monitoring a DCI-based PEI. In the example illustrated in (a) of FIG. 11, since the terminal 20 succeeds in decoding the DCI-based PEI and is notified of a Wake Up Indication by a DCI-based PEI, for example, the terminal 20 performs SSB reception and monitoring in a PO.

### <Option 2>

The terminal 20 sleeps on the assumption that a DCI-based PEI is not notified from the base station 10. In the example illustrated in (b) of FIG. 11, since the terminal 20 cannot detect the RS / Sequence-based PEI, the terminal 20 sleeps and skips the subsequent signal reception.

### (Example 5)

Next, Example 5 will be described. Example 5 relates to arrangement of DCI-based PEI. Hereinafter, options 1 to 3 will be described as examples of the arrangement of the DCI-based PEI. Note that although an example related to the arrangement of the DCI-based PEI will be described below, the arrangement methods described in Option 1 to Option 3 below may also be applied to the RS/sequence-based PEI.

### <Option 1>

The time position of the DCI-based PEI may be configured to be offset from a time position of a specific channel (or a specific signal) in the time direction. The frequency position of the DCI-based PEI may be configured to be offset from a frequency position of a specific channel (or a specific signal) in the frequency direction. The time-frequency position of the DCI-based PEI may be configured to be offset from a time-frequency position of a specific channel (or a specific signal) in the time direction and the frequency direction.

The value of the offset in each example described above may be defined in a specification, or may be notified from the base station 10 to the terminal 20 by RRC signaling, MAC CE, DCI, or the like. The terminal 20 can recognize the resource position of the DCI-based PEI based on the time position / frequency position of a specific channel (or a specific signal) and the offset and can receive the PEI.

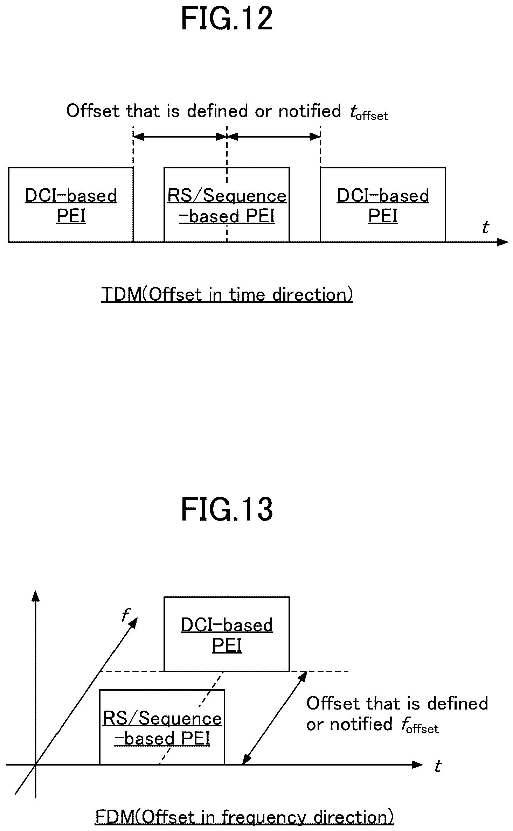

FIG. 12 shows an example in which a time direction offset is used. In the example illustrated in FIG. 12, RS/sequence-based PEI is used as the specific signal. As illustrated in FIG. 12, a DCI-based PEI is arranged at a time position offset by a predetermined time from the time position at the center of the RS/sequence-based PEI.

FIG. 13 shows an example in which a frequency direction offset is used. Also in the example illustrated in FIG. 13, RS/sequence-based PEI is used as the specific signal, and a DCI-based PEI having the lower end at the frequency position offset by f_{offset} from the frequency position of the lower end of the RS/sequence-based PEI is arranged.

As the specific channel/specific signal in option 1, PO, SSB, or the like may be used in addition to RS/sequence-based PEI.

### <Option 2>

The time position of the DCI-based PEI may be configured as an absolute value. Also, the frequency position of the DCI-based PEI may be configured as an absolute value. In addition, the time-frequency position of the DCI-based PEI may be configured by an absolute value. These absolute values may be defined in a specification, or may be configured from the base station 10 to the terminal 20 by RRC signaling, MAC CE, DCI, or the like. The terminal 20 may recognize a resource of the DCI-based PEI according to an absolute value indicating a time position/frequency position of the DCI-based PEI to receive the DCI-based PEI.

### <Option 3>

As a configuration of the arrangement (resource) of the DCI-based PEI, a configuration available in the existing PDCCH (DCI) may be used. The configuration available in the existing PDCCH (DCI) is a search space configuration or a CORESET configuration.

For example, in a case where it is prescribed (or configured) to receive an existing DCI_A by monitoring a search space A, it may be prescribed (or configured) to monitor the search space A in order to receive the DCI-based PEI. In this case, the terminal 20 receives the DCI-based PEI by monitoring the search space A.

In this case, for example, the terminal 20 can distinguish between DCI_A and DCI-based PEI by performing blind decoding using different RNTIs for DCI_A and DCI-based PEI. For example, if the RNTI for the DCI-based PEI is RNTI_PEI, the terminal 20 determines that a DCI successfully decoded using RNTI_PEI is the DCI-based PEI.

According to the Example 5, the terminal 20 can appropriately recognize the resource position of the DCI-based PEI.

### (Apparatus Configuration)

Next, functional configuration examples of the base station 10 and the terminal 20 that execute the processes and operations described above will be described. The base station 10 and the terminal 20 include functions for performing the above-described Examples 1-5. However, each of the base station 10 and the terminal 20 may include only a function of any one of the Examples 1-5.

### <Base Station 10>

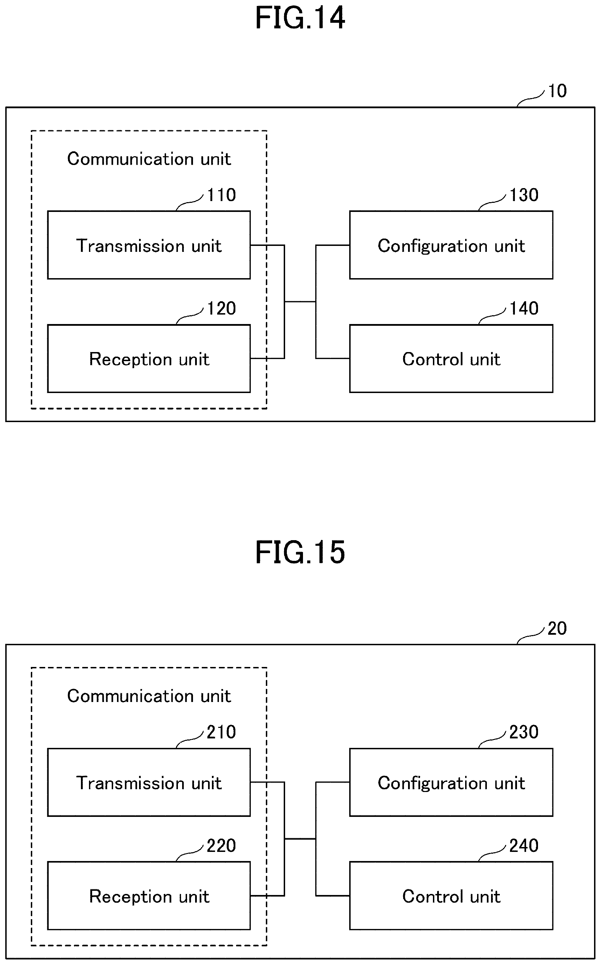

FIG. 14 is a diagram illustrating an example of a functional configuration of the base station 10. As illustrated in FIG. 14, the base station 10 includes a transmission unit 110, a reception unit 120, a configuration unit 130, and a control unit 140. The functional configuration shown in FIG. 14 is merely an example. As long as the operation according to the embodiment of the present invention can be executed, the function division and the name of the function unit may be any. The transmission unit 110 and the reception unit 120 may be referred to as a communication unit.

The transmission unit 110 has a function of generating a signal to be transmitted to the terminal 20 side and wirelessly transmitting the signal. The reception unit 120 includes a function of receiving various signals transmitted from the terminal 20 and acquiring, for example, information of a higher layer from the received signal. Also, the transmission unit 110 has a function of transmitting NR-PSS, NR-SSS, NR-PBCH, DL / UL control signal, DL data and the like to the terminal 20. The transmission unit 110 transmits the notification (indication) described in the Examples 1-5 to the terminal 20.

The configuration unit 130 stores configuration information configured in advance and various kinds of configuration information to be transmitted to the terminal 20 in the storage device, and reads the configuration information from the storage device as necessary.

The control unit 140 performs, for example, resource allocation, overall control of the base station 10, and the like. It should be noted that a functional unit related to signal transmission in the control unit 140 may be included in the transmission unit 110, and a functional unit related to signal reception in the control unit 140 may be included in the reception unit 120. The transmission unit 110 and the reception unit 120 may be referred to as a transmitter and a receiver, respectively.

### <Terminal 20>

FIG. 15 is a diagram illustrating an example of a functional configuration of the terminal 20. As illustrated in FIG. 15, the terminal 20 includes a transmission unit 210, a reception unit 220, a configuration unit 230, and a control unit 240. The functional configuration shown in FIG. 15 is merely an example. As long as the operation according to the embodiment of the present invention can be executed, the function division and the name of the function unit may be any. The transmission unit 210 and the reception unit 220 may be referred to as a communication unit.

The transmission unit 210 generates a transmission signal from the transmission data and wirelessly transmits the transmission signal. The reception unit 220 wirelessly receives various signals and acquires a signal of a higher layer from the received signal of the physical layer.

The configuration unit 230 stores various types of configuration information received from the base station 10 by the reception unit 220 in the storage device, and reads the configuration information from the storage device as necessary. The configuration unit 230 also stores configuration information that is configured in advance. The content of the configuration information is, for example, information necessary for the operations described in the Examples 1-5.

The control unit 240 controls paging monitoring in a PO based on information received from the base station 10. It should be noted that a functional unit related to signal transmission in the control unit 240 may be included in the transmission unit 210, and a functional unit related to signal reception in the control unit 240 may be included in the reception unit 220. The transmission unit 210 and the reception unit 220 may be referred to as a transmitter and a receiver, respectively.

According to the present embodiment, at least a terminal and a paging monitoring method described in, for example, the following items are provided.
(Item 1)
   A terminal including:
   a reception unit configured to receive a first indication related to paging monitoring from a base station; and
   a control unit configured to determine whether to receive a second indication by the reception unit based on the first indication,
   wherein, when the reception unit receives the second indication, the reception unit skips paging monitoring or performs paging monitoring based on the second indication.
(Item 2)
   The terminal as described in item 1,
   wherein the reception unit skips reception of a synchronization signal and performs reception of a reference signal to perform paging monitoring, based on the second indication.
(Item 3)
   The terminal as described in item 1 or 2,
   wherein, when the second indication indicates a subgroup to which the terminal belongs, the reception unit performs paging monitoring.
(Item 4)
   The terminal as described in any one of items 1-3,
   wherein when information notified by the first indication and information notified by the second indication are different from each other, the control unit determines which of the information notified by the first instruction and the information notified by the second instruction is prioritized based on received power strength or received quality of the first indication and received power strength or received quality of the second indication.
(Item 5)
   The terminal as described in any one of items 1-4,
   wherein, when the reception unit fails to detect the first indication,
   the control unit determines to receive the second indication by assuming that the second indication is transmitted from the base station, or determines not to receive the second indication by assuming that the second indication is not transmitted from the base station.
(Item 6)
   A paging monitoring method executed by a terminal, including:
   a step of receiving a first indication related to paging monitoring from a base station; and
   a step of determining whether to receive a second indication based on the first indication,
   wherein, when the terminal receives the second indication, the terminal skips paging monitoring or performs paging monitoring based on the second indication.

According to any one of the first to sixth items, it is possible to appropriately reduce power consumption of a terminal in monitoring paging. According to the second item, paging monitoring can be efficiently performed using a reference signal. According to the third item, paging monitoring can be efficiently performed using the subgroup information. According to the fourth item, even when the information notified by the first indication and the information notified by the second indication are different from each other, it is possible to appropriately perform an operation. According to the fifth aspect, even when the first indication cannot be detected, an appropriate operation can be performed.

### (Hardware configuration)

The block diagrams (Fig. 14 and Fig. 15) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

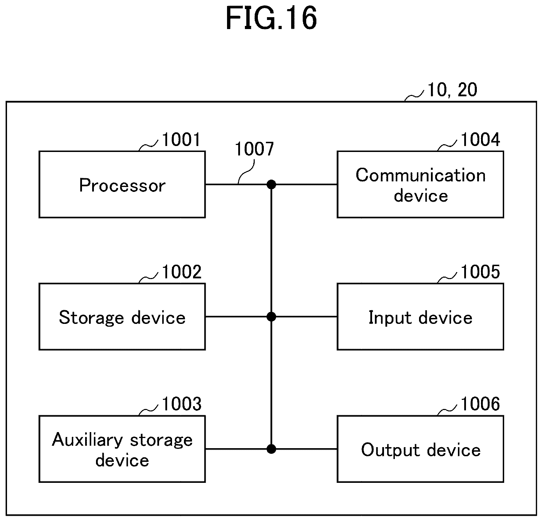

For example, the base station 10, the terminal 20, and the like in one embodiment of this disclosure may function as a computer for performing the processing of a radio communication method of this disclosure. Fig. 16 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in Fig. 14 may be attained by a control program that is stored in the storage device 1002 and is operated by the processor 1001. In addition, for example, the control unit 240 of the terminal 20 illustrated in Fig. 15 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage device 1003 may be referred to as an auxiliary storage unit. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" and "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, the SS block or CSI-RS is an example of a synchronization signal or reference signal.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### [Description of Symbols]

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device

## Claims

1. A terminal comprising:
a reception unit configured to receive a first indication related to paging monitoring from a base station; and
a control unit configured to determine whether to receive a second indication by the reception unit based on the first indication,
wherein, when the reception unit receives the second indication, the reception unit skips paging monitoring or performs paging monitoring based on the second indication.

2. The terminal as claimed in claim 1,
wherein the reception unit skips reception of a synchronization signal and performs reception of a reference signal to perform paging monitoring, based on the second indication.

3. The terminal as claimed in claim 1 or 2,
wherein, when the second indication indicates a subgroup to which the terminal belongs, the reception unit performs paging monitoring.

4. The terminal as claimed in any one of claims 1-3,
wherein when information notified by the first indication and information notified by the second indication are different from each other, the control unit determines which of the information notified by the first instruction and the information notified by the second instruction is prioritized based on received power strength or received quality of the first indication and received power strength or received quality of the second indication.

5. The terminal as claimed in any one of claims 1-4,
wherein, when the reception unit fails to detect the first indication,
the control unit determines to receive the second indication by assuming that the second indication is transmitted from the base station, or determines not to receive the second indication by assuming that the second indication is not transmitted from the base station.

6. A paging monitoring method executed by a terminal, comprising:
a step of receiving a first indication related to paging monitoring from a base station; and
a step of determining whether to receive a second indication based on the first indication,
wherein, when the terminal receives the second indication, the terminal skips paging monitoring or performs paging monitoring based on the second indication.
